# EUROPEAN PATENT APPLICATION

(11) **EP 1 223 189 A1**
(43) Date of publication of application: **17.07.2002**
(21) Application number: 01300324.9
(22) Date of filing: 16.01.2001
(51) Int. Cl.: C08K 3/08, C08K 3/00, C08L 7/02, C08L 21/02

(54) **Latex compositions**

(71) Applicant: WRP Asia Pacific Sdn. Bhd., Selangor Darul Ehsan (MY)
(72) Inventor: Thiess, Axel, Lot 1, Jalan 3, 43900 Sepang, Selangor Darul Ehsan (MY); AB Wohab, Shukri, Lot 1, Jalan 3, 43900 Sepang, Selangor Darul Ehsan (MY)
(74) Representative: Marlow, Nicholas Simon

(57) **Abstract**

The use of bismuth and/or bismuth compositions in a rubber latex composition. The composition may be used for the production of articles having radiation attenuation properties.

## Description

This invention relates to natural and synthetic rubber latex compositions and more particularly to such compositions for producing articles having opacity to radiation such as X-rays and radiation from radioactive sources and other high voltage energy emissions.

### BACKGROUND OF THE INVENTION

Various materials are known for incorporation in latex compositions to introduce radiation opacity.

The most commonly used materials are metallic lead and lead compounds, for example lead oxide, lead carbonate and the like.

According to US-5001354, up to 20% by volume of tungsten can also be incorporated into natural rubber latex but loadings above this level cannot easily be achieved because the tungsten additive tends to settle out. Barium and barium compounds have also been widely used.

WO 93/02457(PCT/GB92/01302) describes the incorporation of at least 25% by volume particulate tungsten material, e.g. W, W₂O₃, WC₄, into a flexible polymer, especially an elastomeric material, preferably ethylene-propylene-diene rubber, to form a composition used to produce radiation protective glove having a radiation absorbing capacity equivalent to that of 0.13mm of lead.

No additive that can be mixed into rubber latex at high loadings to provide compositions with a high degree of radiation opacity, especially at high radiation levels has hitherto been found.

### SUMMARY OF THE INVENTION

This invention is based on the surprising observation that powdered water-insoluble bismuth and/or bismuth compounds can be incorporated into rubber latex at loadings above 20 parts per hundred rubber (phr) without settling problems, to produce compositions for producing articles such as rubber gloves and other protective wear having radiation attenuation at least as high and generally much higher than hitherto known products using lead, barium and tungsten.

The bismuth compound that is preferably used is bismuth oxide(Bi₂O₃) but any other inert water-insoluble bismuth compound can be used.

The bismuth or bismuth compound can be used in an amount of at least up to 80phr. It is incorporated in powder form preferably in the form of a preformed aqueous dispersion containing for example, 60% to 80% bismuth or bismuth compound especially about 77% by weight.

The particle size of the bismuth or bismuth compound powder should be less than 5 microns, preferably less than 2 microns, and more preferably less than 0.4 micron.

The latex composition, in addition to the bismuth additive, also contains the usual ingredients such as surfactants, accelarators, vulcanising agents, heat sensitisers, pigments, thickeners, antifoam agents and pH regulators in conventional amounts.

The latex is preferably high ammonia centrifuged natural rubber latex concentrate or similar latexes, for example nitrile latex.

The latex composition advantageously has a total solids content of 30% to 60%, especially 40% to 55% and a pH of at least 9, preferably 9 to 12, for example about 11.

The viscosity of the composition is preferably at least 700 more preferably at least 900cps measured using a Brookfield viscometer, spindle no. 2 at a speed of 30rpm. The optimum viscosity is determined by particular manner by which products are to be made from the composition.

The products produced from the composition of the invention are preferably rubber gloves and aprons for medical and industrial use and personal protection and can be produced by coating or dipping in conventional manner.

The products produced from the composition have radiation attenuation values which are very much superior to existing products currently on the market and incorporating lead or barium compounds over a wide range of radiation levels at both long and short term exposure times.

The following example illustrates the invention. A composition of the of the following formulation in Table 1 was made up: -

**Table 1**

| **MATERIAL** | **PHR** |
|---|---|
| 60% HA Latex | 100.00 |
| 10% Alkaline pH adjuster | 0.42 |
| 10% Anionic stabiliser | 0.25 |
| 20% Non-ionic surfactant stabiliser | 0.05 |
| 40% Curative dispersion | 3.82 |
| 10% Black Pigment | 0.05 |
| 74% Bismuth oxide dispersion | 100.54 |
| 11% Heat-sensitising agent | 0.4 |
| 10% Anti-foam agent | 0.06 |
| 3% Thickener | 1.25 |
| Dl Water | - |
| Total | 206.84 |
| TSC(%) | 50 |

The composition had the physical properties shown in Table 2.

**Table 2**

| **Properties** | **Results** |
|---|---|
| TSC (%) | 49.5 |
| pH | 10.92 |
| Viscosity(cps), | |
| i. spindle no.2, speed 30rpm | 720 |
| ii. spindle no. 2, speed 12rpm | 1225 |

The composition was used to produce rubber gloves by a dipping process.

After drying the formers at a temperature between 50° and 60°C, the formers were dipped into coagulant at a temperature of approximately 50°C with a dwell time of 1 second and up and down times of 10 seconds each. The coagulant was dried on the formers at a temperature of 90° to 100° C The coagulant-coated formers were dipped into the latex composition at a temperature of approximately 25°C with a dwell time of 10 seconds for short exposure gloves and 35 seconds for long exposure gloves. The down and up times were each 14 seconds.

The latex was gelled at a temperature of 90 to 100° C and beads were formed manually on the glove. After leaching in a water bath at a temperature of 30° to 50°C for 1 to 3 minutes, the latex was cured slowly at a temperature of 100° to 110°C for 30 to 60 minutes.

The formed gloves were then dipped into an antitack slurry at a temperature of 40° to 60°C and manually stripped from the formers.

The long exposure gloves had a thickness of approximately 0.5 mm and the short exposure gloves, a thickness of approximately 0.2mm.

In radiation attenuation tests, the gloves showed the values given in Table 3.

**Table 3**

| ATTENUATION RADIATION REDUCTION % | | |
|---|---|---|
| Direct Beam Energy Level | Long Exposure Gloves | Short Exposure Gloves |
| 60 KVP HVL 2.3mm AL | 60.0% | 38.0% |
| 80KVP HVL 4.3mm AL | 51.1% | 29.0% |
| 100KVP HVL 4.3mm AL | 46.0% | 25.0% |
| 125 KVP HVL 5.6mm AL | 34.0% | 18.0% |

## Claims

1. The use of powdered bismuth and/or a water-insoluble bismuth compound in a rubber latex composition for the production of articles having radiation attenuation properties.

2. A latex composition comprising natural or synthetic rubber latex and incorporating powdered bismuth and/or a water-insoluble bismuth compound in an amount of at least 20 parts per hundred rubber.

3. A composition according to claim 2 containing bismuth and/or a water insoluble bismuth compound in an amount from 20 to 80 parts per hundred rubber.

4. A composition according to claim 2 or claim 3 having a total solids contents of 30 to 60%.

5. A composition according to claim 4 having a total solids content of 40 to 55%.

6. A composition according to anyone of claims 2 to 5, wherein the bismuth additive is bismuth oxide.

7. A composition according to anyone of claims 2 to 6, wherein the latex is high ammonia centrifuged natural rubber latex concentrate.

8. Radiation protective articles produced from a composition according to anyone of claims 2 to 7.

9. Radiation protective gloves produced from a composition according to anyone of claims 2 to 7.
